Europäisches Patentamt

European Patent Office

Office européen des brevets ·

(11) Veröffentlichungsnummer: **0 204 950**
**A2**

# (12) EUROPÄISCHE PATENTANMELDUNG

(21) Anmeldenummer: 86106110.9

(22) Anmeldetag: 05.05.86

(51) Int. Cl.⁴: **C08J 7/00**

(30) Priorität: 14.05.85 DE 3517274

(43) Veröffentlichungstag der Anmeldung:
**17.12.86 Patentblatt 86/51**

(84) Benannte Vertragsstaaten:
**AT BE DE FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Schmid, Helmut, Dr.**
**Wedelstrasse 69**
**D-4150 Krefeld 1(DE)**
Erfinder: **Müller, Peter Rolf, Dr.**
**Paul-Klee-Strasse 76**
**D-5090 Leverkusen 1(DE)**
Erfinder: **Löwer, Hartmut, Dr.**
**820 Linda Lane**
**Pittsburgh Pennsylvania 15243(US)**
Erfinder: **Depcik, Hans-Werner, Ing.**
**Vennstrasse 124 A**
**D-4000 Düsseldorf(DE)**

(54) Verfahren zur Oberflächenausrüstung.

(57) In den erhitzten Oberflächenbereich eines vorgeformten Kunststoffteiles wird ein gasförmiges Sublimat als Oberflächenverbesserung eingelagert.

EP 0 204 950 A2

## Verfahren zur Oberflächenausrüstung

Die Erfindung betrifft ein Verfahren zur nachträglichen Oberflächenausrüstung von geformten Kunststoffteilen mit bestimmten Substanzen.

Es ist oft erwünscht, Formkörper und Halbzeuge mit zusätzlichen oder verbesserten Eigenschaften auszurüsten, um beispielsweise bestimmte Farbeffekte zu erzielen oder durch Konzentration von UV-Absorbern in der oberen Schicht eine Verwitterung durch UV-Strahlen zu reduzieren.

Bekannt sind Beschichtungen von Kunststoffteilen mit Lacken oder anderen Stoffen, die im flüssigen Zustand aufgetragen werden. Das Lösungsmittel wird dann anschließend verdampft.

Der Nachteil dieses Verfahrens besteht darin, daß solche Oberflächen empfindlich sind, insbesondere unterliegen sie bei mechanischer Beanspruchung starkem Abrieb. Auch ist das Verdampfen von Lösungsmittel im Hinblick auf die Umwelt nicht unproblematisch.

Bekannt sind ferner Kunststoffteile, bei denen die äußere Schicht mittels eines Lösungsmittels, welches gleichzeitig die Substanz enthalten kann, angequollen wird. Anschließend wird das Lösungsmittel durch Wärme wieder entfernt.

Um Substanzen auf diesem Wege einlagern zu können, ist ein starkes Anquellen der Oberfläche des Kunststoffteiles erforderlich, wodurch der Kunststoff stark angegriffen wird, so daß nach dem Verdampfen des Lösungsmittels Schädigungen der Materialstruktur oder zumindest des Aussehens zurückbleiben können. Auch tritt bei der Verdampfung des Quellmittels ein Teil der Substanzen wieder aus. Dieser Verlust ist gerade nahe der Oberfläche, wo die Effektivität am größten sein sollte, besonders stark.

Aufgabe der Erfindung ist es, ein Verfahren zur nachträglichen Oberflächenausrüstung von vorgeformten Kunststoffteilen bzw. Halbzeugen zu finden, welches ohne sichtbare Strukturschädigung des Oberflächenbereiches der thermoplastischen Kunststoffe eine hinreichende Anreicherung von Substanzen, durch welche besondere Eigenschaften -wie UV-Schutz, Farbigkeit, Gleitfähigkeit, antistatisches Verhalten usw. -gefördert werden, mit einfachen, wirtschaftlichen Mitteln ermöglicht.

Die Aufgabe wird erfindungsgemäß dadurch gelöst, daß die Oberfläche eine Kunststoffteiles mit mindestens einer sublimierbaren Substanz beaufschlagt wird, die in gasförmiger Phase mit einer Temperatur ≥ 130° C in die auf mindestens 75°C erwärmte Oberfläche des Kunststoffteiles hineindiffundiert wird, um dort durch Abkühlung abgelagert zu werden.

Für den Fachmann ist es überraschend, daß sublimierbare Substanzen als erhitztes Gas schon in eine nur mäßig erwärmte Oberfläche eines bereits ausgeformten Kunststoffteiles in einer zur Erzielung einer bestimmten Eigenschaft notwendigen Menge und in einer wirtschaftlich akzeptablen Zeit nachträglich so einzubauen sind, daß die spezifische Konzentration der Substanz mit der Tiefe entsprechend der Abnahme der von außen kommenden Einwirkung eines fremden Mediums abnimmt, wodurch eine optimale Nutzung der meist sehr teuren Substanzen erzielt wird. Es hat sich ferner gezeigt, daß trotz hoher Glastemperatur eine Schädigung des Kunststoffteiles nicht eintritt, wenn an der Oberfläche bis zu einer Tiefe von maximal 2 mm Temperaturen zwischen vorzugsweise 95°C und Glastemperatur + 15°C bei amorphen Thermoplasten bzw. Schmelztemperatur + 30°C bei teilkristallinen Thermosplasten vorhanden sind. Vorteilhafterweise kann die im Kunststoffteil verbleibende Restwärme vom Spritzgießen bzw. Extrudieren dabei genutzt werden. Durch entsprechende Wahl der Substanzen kann so nachträglich die UV-Beständigkeit, Antioxidanz, hydrolytische Stabilisierung, Leitfähigkeit, Gleiteigenschaft und/oder Haftung erhöht werden, wodurch die Einsatzmöglichkeit der Kunststoffe generell verbessert werden kann.

In einer besonderen Durchführung des Verfahrens werden organische Substanzen mit einem Molekulargewicht von 100 -3000 eingelagert.

Es ist erstaunlich, daß organische Molekularstrukturen von dieser Länge und/oder Größe noch in die Oberfläche eindiffundiert werden können, wobei Molekulargewichte von 120 -1500 sich als besonders geeignet erwiesen haben.

In einer anderen Durchführung des Verfahrens wird die Substanz zum Eindiffundieren auf eine Temperatur zwischen 150°C und 300°C erhitzt.

Bei den vorgenannten Temperaturen, die nach oben durch die Zersetzungstemperatur begrenzt sind, reicht die kinetische Energie unter Nutzung des Partialdurckgefälles aus, in kurzer Zeit die gewünschten Mengen an Substanzen bis zu Tiefen von 1500μm einzulagern, wobei der Vorgang noch durch Erhöhung des Gasdruckes verbessert werden kann. Der Einfluß der höheren Gastemperatur auf die Qualität des Kunststoffteiles ist bei den üblichen kurzen Zeiten von wenigen Sekunden bis zu einigen Minuten vernachlässigbar.

In einer möglichen Durchführung des Verfahrens wird die Oberfläche des Kunststoffteiles mit Energiestrahlen erwärmt.

Energiereiche Strahlen, wie sie durch Infrarot-Strahlung, Mikrowellen bzw. Laser-Strahlung erzeugt werden können, sind besonders geeignet, in kurzer Zeit die Oberfläche des Kunststoffteiles kurzfristig zu erwärmen, wobei die Frequenz möglichst so gewählt werden sollte, daß sie z.B. im Resonanzbereich der Dipole liegt. Auch können die Energiestrahlen zugleich die sublimierbare Substanz aufheizen. In einer bevorzugten Durchführung des Verfahrens wird die Expositionszeit t für eine vorgegebene Eindringtiefe der Substanz nach der Formel $\ln t = \frac{A}{T} - B$ gewählt, wobei T absolute Temperatur und B,A stoffabhängige Konstanten bedeuten.

Die beiden Konstanten A bzw. B sind proportional der Aktivierungsenergie des Kunststoffes bzw. dem Frequenzfaktor des Diffusionskoeffizienten und können von Fall zu Fall durch zwei Versuche über obige Gleichung mit zwei Unbekannten ermittelt werden. Wirtschaftliche Ergebnisse werden erzielt, wenn A einen Wert zwischen 3500 und 18 500, insbesondere zwischen 7500 und 12 500, und B einen Wert zwischen 10 und 30, insbesondere zwischen 14 und 25, annimmt, wobei in der Gleichung für $\ln t$ nur positive Werte zugelassen sind.

Kunststoffteil -insbesondere Thermoplast -mit Oberflächenausrüstung, hergestellt gemäß Verfahrensansprüchen 1 bis 6, bei dem in der Oberfläche eines Kunststoffteiles eine in der Tiefe mengenmäßig abnehmende sublimierbare Substanz eingelagert ist, deren Maximum nahe der Oberfläche liegt.

Durch die mit der Tiefe abnehmende Konzentration kann das Kunststoffteil entsprechend den von außen kommenden Angriffen, die ebenfalls mit der Tiefe abnehmen, bei sparsamstem Verbrauch geschützt werden, was sehr wirtschaftlich ist, insbesondere wenn die Substanzen teuer sind. Auch bei farbiger Gestaltung der häufig von Natur her trüben Kunststoffe genügt es, wenn entsprechend der mit der Tiefe abnehmenden Reflexion des Lichtes entsprechende Farbstoffmengen vorhanden sind.

In einer gebräuchlichen Ausführung des Kunststoffteiles beträgt die spezifische Konzentration der Substanz in der Tiefe, in der die Intensität des von außen einwirkenden fremden Mediums auf ein Viertel des ursprünglichen Wertes gemindert ist, mindestens noch die Hälfte der maximalen spezifischen Konzentration der Substanz.

Die Tiefe, bis zu der Substanzen eingelagert werden sollen, hängt von dem späteren äußeren Medium ab, welches im Kunststoffteil beeinflußt werden soll. Erfahrungsgemäß sollten die Halbwerte der spezifischen Konzentration in einem Bereich bei UV-Absorbern 10 -100 μm, Antioxydantien 100 -1500 μm, Brandschutzmittel 500 -1500 μm, Farbstoffe 20 -500 μm, Antistatika 1 -20 μm und Gleitmittel 1 -20 μm liegen. Diese Tiefe gibt den Kunststoffteilen ausreichend die gewünschten Eigenschaften hinsichtlich Korrosion, Hydrolyse, Farbeffekt und Adhäsion.

Geeignet sind dickwandige -schichtenförmige oder folienartige Kunststoffteile aus Celluloseacetat, Cellulosepropionat, Celluloseacetat-Butyrat, Polyamide, Polyolefine, Styrolacrylnitrilbutadien, Polycarbonate, lineare Polyester wie Polybutylterephthalat, aromatische Polyester, thermoplastische Urethane, Polyphenylensulfid, LC-Polymere, Polyurethangießharze und Epoxyharze. Ebenfalls auch Blends oder Co-Polymere aus thermoplastischen Produkten.

Als Substanzen kommen alle sublimierbaren Stoffe in Frage, wie beispielsweise Benzotriazole, O-Hydroxybenzophenone, Benzylidenmalonsäureester und substituierte Acrylnitrile und Stabilisatoren vom Typ sterisch gehinderter Amine.

Beispiele

Versuchsapparatur

Die Versuchsapparatur ist zweiteilig aufgebaut. Mit Hilfe der ersten Apparatur wird die Oberfläche der Kunststoff-Probe maximal 3 min aufgeheizt. Dies geschieht mittels temperaturgeregelter Heißluft. Die Strömungsgeschwindigkeit der Heißluft ist gering. Die Oberfläche der Kunststoff-Probe ist ca. 3 mm von der Austrittsöffnung des Heißluftkanals entfernt. Anschließend wird die heiße Oberfläche der Kunststoff-Probe über die Öffnung eines beheizbaren Ofens angeordnet, in dessen temperaturgeregelter Kammer sich eine durch Sieden des sublimierbaren Stoffes gesättigte Gasphase befindet. Die Öffnung ist immer verschlossen, entweder mit einer Blindprobe oder mit der zu beaufschlagenden Probe. Die Bedampfungszeit der Kunststoff-Probe liegt zwischen 10 sec und 100 sec.

1. Versuch mit Tinuvin P (Molekulargewicht 139).

Die Oberfläche der Kunststoff-Probe aus Polycarbonat 60 $^x$ 60 $^x$ 4 mm wird innerhalb von 2 min mit Heißluft der Temperatur von ca. 200°C auf ca. 100°C bis 110°C aufgewärmt. Anschließend werden die heißen Oberflächen während 10, 20, 30 und 100 sec über ein Tinuvin-P-haltiges Gas der Temperatur von ca. 200°C behandelt. Die in dem Oberflächenbereich einsublimierten Mengen von Tinuvin P wurden dann UV-spektroskopisch bestimmt. Man erhält

|            | 10"             | 20"             | 30"             | 100"             |
| ---------- | --------------- | --------------- | --------------- | ---------------- |
| 210° C Tinuvin P | $1,8$ mg/cm$^2$ | $2,4$ mg/cm$^2$ | $3,1$ mg/cm$^2$ | $11,9$ mg/cm$^2$ |

2. Versuch mit Tinuvin 350 (Molekulargewicht 233)

Bei gleichem Versuchsaufbau und gleicher Kunststoffprobe ergeben sich bei einer Temperatur der gasförmigen Substanz von ca. 225° C folgende Ergebnisse:

|        | 30 sec          | 60 sec          | 90 sec          |
| ------ | --------------- | --------------- | --------------- |
| 225° C | $0,7$ mg/cm$^2$ | $1,5$ mg/cm$^2$ | $2,1$ mg/cm$^2$ |

## Ansprüche

1. Verfahren zur nachträglichen Oberflächenausrüstung von geformten Kunststoffteilen mit bestimmten Substanzen, dadurch gekennzeichnet, daß die Oberfläche eines Kunststoffteiles mit mindestens einer sublimierbaren Substanz beaufschlagt wird, die in gasförmiger Phase mit einer Temperatur $\geq$ 130° C in die auf mindestens 75° C erwärmte Oberfläche des Kunststoffteiles hineindiffundiert wird, um dort durch Abkühlung abgelagert zu werden.

2. Verfahren nach Anspruch 1, dadurch gekennzeichnet, daß organische Substanzen mit einem Molekulargewicht von 100 bis 3000 eingelagert werden.

3. Verfahren nach Ansprüchen 1 bis 2, dadurch gekennzeichnet, daß die Substanz zum Eindiffundieren auf eine Temperatur zwischen 150° C bis 300° C erhitzt wird.

4. Verfahren nach Ansprüchen 1 bis 3, dadurch gekennzeichnet, daß die Oberfläche des Kunststoffteiles mit Energiestrahlen erwärmt wird.

5. Verfahren nach Ansprüchen 1 bis 4, dadurch gekennzeichnet, daß eine Expositionszeit t für eine vorgegebene Eindringtiefe der Substanz nach der Formel $\ln t = \frac{A}{T} - B$ gewählt wird, wobei T absolute Temperatur und B, A stoffabhängige Konstanten bedeuten.

6. Kunststoffteil -insbesondere Thermoplast - mit Oberflächenausrüstung, dadurch gekennzeichnet, daß im Oberflächenbereich eines Kunststoffteiles eine in der Tiefe mengenmäßig abnehmende sublimierbare Substanz eingelagert ist, deren Maximum nahe der Oberfläche liegt.

7. Kunststoffteil nach Anspruch 6, dadurch gekennzeichnet, daß die spezifische Konzentration der Substanz in der Tiefe, in der die Intensität des von außen einwirkenden fremden Mediums auf ein Viertel des ursprünglichen Wertes gemindert ist, mindestens noch die Hälfte der maximalen spezifischen Konzentration der Substanz beträgt.